(19) Europäisches Patentamt
European Patent Office
Office européen des brevets

(11) **EP 3 993 493 B1**

(12) **EUROPEAN PATENT SPECIFICATION**

(45) Date of publication and mention
of the grant of the patent:
**08.11.2023  Bulletin 2023/45**

(21) Application number: **20853359.6**

(22) Date of filing: **27.07.2020**

(51) International Patent Classification (IPC):
**H04L 5/00** (2006.01)          **H04W 76/28** (2018.01)
**H04W 52/02** (2009.01)

(52) Cooperative Patent Classification (CPC):
**H04L 5/0078; H04L 5/0098; H04W 52/0216;
H04W 76/28;** Y02D 30/70

(86) International application number:
**PCT/CN2020/104985**

(87) International publication number:
**WO 2021/027551 (18.02.2021 Gazette 2021/07)**

(54) **COMMUNICATION METHOD AND DEVICE**

KOMMUNIKATIONSVERFAHREN UND -VORRICHTUNG

PROCÉDÉ ET DISPOSITIF DE COMMUNICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.08.2019  CN 201910753227**

(43) Date of publication of application:
**04.05.2022  Bulletin 2022/18**

(73) Proprietor: **Huawei Technologies Co., Ltd.
Longgang District
Shenzhen,
Guangdong 518129 (CN)**

(72) Inventors:
• **XUE, Yifan**
**Shenzhen, Guangdong 518129 (CN)**
• **WANG, Jian**
**Shenzhen, Guangdong 518129 (CN)**

(74) Representative: **Gill Jennings & Every LLP
The Broadgate Tower
20 Primrose Street
London EC2A 2ES (GB)**

(56) References cited:
**WO-A1-2018/228501      CN-A- 109 496 454
CN-A- 109 788 553      CN-A- 109 804 662**

• **MEDIATEK INC: "Summary of Cross-slot
Scheduling Power-Saving Techniques", 3GPP
DRAFT; R1-1907918_SUMMARY#3 OF OFFLINE
ON CROSS-SLOT SCHEDULING, 3RD
GENERATION PARTNERSHIP PROJECT (3GPP),
MOBILE COMPETENCE CENTRE ; 650, ROUTE
DES LUCIOLES ; F-06921 SOPHIA-ANTIPOLIS
CEDEX ; F , vol. RAN WG1, no. Reno, NV, USA;
20190513 - 20190517 20 May 2019 (2019-05-20),
XP051740176, Retrieved from the Internet:
URL:http://www.3gpp.org/ftp/tsg%5Fran/WG1%
5FRL1/TSGR1%5F97/Docs/R1%2D1907918%2Ez
ip [retrieved on 2019-05-20]**
• **HUAWEI ET AL: "Procedure of cross-slot
scheduling for UE power saving", 3GPP DRAFT;
R1-1906006, 3RD GENERATION PARTNERSHIP
PROJECT (3GPP), MOBILE COMPETENCE
CENTRE ; 650, ROUTE DES LUCIOLES ; F-06921
SOPHIA-ANTIPOLIS CEDEX ; FRANCE , vol. RAN
WG1 3 May 2019 (2019-05-03), pages 1-12,
XP051708048, Retrieved from the Internet:
URL:http://www.3gpp.org/ftp/tsg%5Fran/WG1%
5FRL1/TSGR1%5F97/Docs/R1%2D1906006%2Ez
ip**

**Description**

**TECHNICAL FIELD**

This application relates to the field of communications technologies, and in particular, to a communication method and an apparatus.

**BACKGROUND**

5th generation (5th generation, 5G) new radio (new radio, NR) supports the bandwidth part (bandwidth part, BWP) technology, to be specific, supports transmission between a network device and a terminal device by occupying a bandwidth part. On one carrier, the network device may configure a plurality of BWPs (including a plurality of uplink BWPs and a plurality of downlink BWPs) for the terminal device, so that the terminal device can support a plurality of services. In an existing standard, when the terminal device works in one cell, there is only one active downlink BWP and one active uplink BWP. However, the active BWP may be changed, and this is referred to as BWP switching.

Generally, the network device may indicate BWP switching by using downlink control information (downlink control information, DCI) used for scheduling data. For example, the terminal device receives one piece of DCI in a slot n on a downlink BWP1, and the DCI schedules the terminal device to receive downlink data (that is, data on a physical downlink shared channel (physical downlink shared channel, PDSCH)) in a slot n+M on a downlink BWP2. The terminal device starts to receive the downlink data in a start position of the slot n+M on the downlink BWP2.

Currently, research on power consumption reduction of the terminal device is increasingly popular. However, the foregoing BWP switching method fails to reduce power consumption of the terminal device. To conduct research on power consumption reduction of the terminal device, it is currently proposed that a power consumption reduction signal may be used to indicate BWP switching before an active time of connected mode (CONNECTED mode, C)-discontinuous reception (discontinuous reception, DRX) of the terminal device. A DRX cycle is configured for the terminal device. The DRX cycle includes "on duration (On Duration)" and an "opportunity for DRX (Opportunity for DRX)". In the "on duration", the terminal device listens to and receives data on a physical downlink control channel (physical downlink control channel, PDCCH). The on duration is the active time of the C-DRX of the terminal device, and correspondingly, the opportunity for DRX is a dormant time.

However, in an existing transmission mechanism, the terminal device receives data scheduling in the active time, and does not receive data scheduling in the dormant time. Therefore, the terminal device can perform BWP switching only in the active time. Currently, it is proposed that before the active time of the C-DRX, the network device sends indication information to indicate the terminal device to perform BWP switching. However, because the terminal device cannot receive data scheduling beyond the active time, it is proposed that the currently introduced power consumption reduction signal is used to carry BWP switching information. However, in this way, because the power consumption reduction signal does not carry data scheduling information, an effective time of the BWP switching needs to be urgently determined.

MEDIATEK INC: "Summary of Cross-slot Scheduling Power-Saving Techniques", 3GPP DRAFT; R1-1907918, discusses the adaptation of cross/same-slot scheduling, additional conditions where the dynamic adaptation on cross-slot scheduling is not applied, adaptation on aperiodic SRS slot offset and/or K1 value, Joint Considerations with BWP, among other considerations. HUAWEI ET AL: "Procedure of cross-slot scheduling for UE power saving", 3GPP DRAFT; R1-1906006, discusses addressing issues for cross-slot scheduling.

**SUMMARY**

This application provides a communication method and an apparatus, to indicate an effective time of BWP switching. The invention is defined by the appended claims. Embodiments not falling within the scope of the claims are exemplary.

According to a first aspect, there is a communication method. The method may include: A network device determines first information, and sends the first information to a terminal device at a first moment, where the first information is used to indicate bandwidth part BWP switching and indicate a start moment at which the terminal device works on a BWP occupied after the switching, and the start moment is a start moment of on duration on duration in a discontinuous reception DRX cycle. The terminal device performs the BWP switching based on the first information, and works, at the start moment, on the BWP occupied after the switching, where the first moment is before the on duration.

According to the foregoing method, an effective time of the BWP switching can be indicated in the first information. In this way, the start moment at which the terminal device works on the BWP occupied after the switching can be determined.

In a possible design, a time interval between the first moment and the start moment of the on duration is greater than specified duration, and the specified duration is greater than or equal to duration for performing the BWP switching by the terminal device. In this way, the moment at which the network device sends the first information can be specified, to ensure that the terminal device completes the BWP switching before the on duration.

In a possible design, the first information is further used to indicate the terminal device to complete the BWP switching before the on duration. In this way, the terminal device may be explicitly indicated to complete the BWP switching before the on duration, so that the terminal device accurately works, at the start moment of the on duration, on the BWP occupied after the switching.

According to a second aspect, this application provides a communication method. The method may include:

A network device determines BWP switching indication information, and sends the BWP switching indication information to a terminal device in a slot n, where the BWP switching indication information includes a first value and a minimum value of a first slot difference, and the first slot difference is an interval between a slot in which first data is transmitted and the slot n. The terminal device determines a first target slot based on the first value of the first slot difference and the slot n, and starts to use the minimum value of the first slot difference in a start position of the first target slot. In this way, an effective time of a minimum value of K0 or K2 may be determined while BWP switching and the minimum value of K0 or K2 are indicated. When the first data is downlink data, the first slot difference is K0, and when the first data is uplink data, the first slot difference is K2. Therefore, if an effective time of the minimum value of the first slot difference is determined, an effective time of the minimum value of K0 or K2 can be determined.

In a possible design, the BWP switching indication information further includes a minimum value of a second slot difference, and the second slot difference is an interval between a slot in which second data is transmitted and the slot n. The terminal device determines a second target slot based on the first value of the first slot difference, the slot n, a first BWP, and a second BWP, where the first BWP is a BWP occupied after the terminal device performs the BWP switching based on the BWP switching indication information, and the second BWP is a BWP occupied after the terminal device performs the BWP switching based on the BWP switching indication information, or the second BWP is a BWP occupied before the terminal device performs the BWP switching based on the BWP switching indication information. The terminal device starts to use a minimum value of the second slot difference in a start position of the second target slot. In this way, effective times of minimum values of K0 and K2 may be determined while the BWP switching and the minimum values of K0 and K2 are indicated. When the first data is downlink data and the second data is uplink data, the first slot difference is K0, and the second slot difference is K2. When the first data is uplink data and the second data is downlink data, the first slot difference is K2, and the second slot difference is K0. Therefore, if the effective time of the minimum value of the first slot difference and an effective time of the minimum value of the second slot difference are determined, the effective times of the minimum values of K0 and K2 can be determined.

In a possible design, when the first data may be downlink data, the terminal device may determine the first target slot based on the first value of the first slot difference and the slot n according to the following formula:

$$A = \left\lfloor n \bullet \frac{2^{\mu_{\text{PDSCH}}}}{2^{\mu_{\text{PDCCH}}}} \right\rfloor + X,$$

where

A is an index value of the first target slot, X is the first value of the first slot difference, $\mu_{\text{PDSCH}}$ is a numerology (numerology) of a BWP on which the first data is located, and $u_{\text{PDCCH}}$ is a numerology of a BWP on which the switching indication information is located.

According to the foregoing method, the first target slot can be accurately determined, so that the effective time of the minimum value of K0 can be determined.

In a possible design, when the first data may be downlink data, and the second data may be uplink data, the terminal device may determine the second target slot based on the first value of the first slot difference, the slot n, the first BWP, and the second BWP according to the following formula:

$$B = \left\lceil \left( \left\lfloor n \cdot \frac{2^{\mu_{\text{PDSCH}}}}{2^{\mu_{\text{PDCCH}}}} \right\rfloor + X \right) \cdot \frac{2^{\mu_{\text{UL,BWP}}}}{2^{\mu_{\text{DL,BWP}}}} \right\rceil,$$

where

B is an index value of the second target slot, X is the first value of the first slot difference, $\mu_{\text{PDSCH}}$ is a numerology of a BWP on which the first data is located, $\mu_{\text{PDCCH}}$ is a numerology of a BWP on which the switching indication information is located, $\mu_{\text{DL,BWP}}$ is a numerology of the first BWP, the first BWP is a downlink BWP, $\mu_{\text{UL,BWP}}$ is a numerology of the second BWP, and the second BWP is an uplink BWP.

According to the foregoing method, the second target slot can be accurately determined, so that the effective time of the minimum value of K2 can be determined.

In a possible design, when the first data is uplink data, the terminal device may determine the first target slot based on the first value of the first slot difference and the slot n according to the following formula:

$$A = \left\lfloor n \cdot \frac{2^{\mu_{PUSCH}}}{2^{\mu_{PDCCH}}} \right\rfloor + X,$$

where

A is an index value of the first target slot, X is the first value of the first slot difference, $\mu_{PUSCH}$ is a numerology of a BWP on which the first data is located, and $\mu_{PDCCH}$ is a numerology of a BWP on which the switching indication information is located.

According to the foregoing method, the first target slot can be accurately determined, so that the effective time of the minimum value of K2 can be determined.

In a possible design, when the first data is downlink data, and the second data is uplink data, the terminal device may determine the second target slot based on the first value of the first slot difference, the slot n, the first BWP, and the second BWP according to the following formula:

$$B = \left\lceil \left( \left\lfloor n \cdot \frac{2^{\mu_{PUSCH}}}{2^{\mu_{PDCCH}}} \right\rfloor + X \right) \cdot \frac{2^{\mu_{DL,BWP}}}{2^{\mu_{UL,BWP}}} \right\rceil,$$

where

B is an index value of the second target slot, X is the first value of the first slot difference, $u_{PDSCH}$ is a numerology of a BWP on which the first data is located, $\mu_{PDCCH}$ is a numerology of a BWP on which the switching indication information is located, $\mu_{UL,BWP}$ is a numerology of the first BWP, the first BWP is an uplink BWP, $\mu_{DL,BWP}$ is a numerology of the second BWP, and the second BWP is a downlink BWP.

According to the foregoing method, the second target slot can be accurately determined, so that the effective time of the minimum value of K0 can be determined.

According to a third aspect, this application further provides a network device. The network device has functions of implementing the network device in the method example of the second aspect. The functions may be implemented by hardware, or may be implemented by hardware executing corresponding software. The hardware or software includes one or more modules corresponding to the functions.

In a possible design, a structure of the network device includes a processing unit and a transceiver unit. These units can execute corresponding functions in the method example. For details, refer to detailed descriptions in the method example. Details are not described herein again.

In a possible design, the structure of the network device includes a transceiver and a processor, and optionally, may further include a memory. The transceiver is configured to receive and send data, and communicate and interact with another device in a system. The processor is configured to support the network device in performing a corresponding function of the network device in the method according to first aspect or the second aspect. The memory is coupled to the processor, and the memory stores a program instruction and data that are necessary for the network device.

According to a fourth aspect, this application further provides a terminal device. The terminal device has functions of implementing the terminal device in the method example of the second aspect. The functions may be implemented by hardware, or may be implemented by hardware executing corresponding software. The hardware or software includes one or more modules corresponding to the functions.

In a possible design, a structure of the terminal device includes a processing unit and a transceiver unit. These units can execute corresponding functions in the method example. For details, refer to detailed descriptions in the method example. Details are not described herein again.

In a possible design, the structure of the terminal device includes a transceiver and a processor, and optionally, may further include a memory. The transceiver is configured to receive and send data, and communicate and interact with another device in a system. The processor is configured to support the terminal device in performing a corresponding function of the terminal device in the method according to the second aspect. The memory is coupled to the processor, and the memory stores a program instruction and data that are necessary for the terminal device.

According to a fifth aspect, this application further provides a communications system. The communications system includes at least one terminal device and at least one network device that are described in the foregoing designs. Further, the network device in the communications system may perform any method performed by the network device in the foregoing methods, and the terminal device in the communications system may perform any method performed by the terminal device in the foregoing methods.

According to a sixth aspect, this application provides a computer storage medium. The computer storage medium stores a computer executable instruction, and when the computer executable instruction is invoked by a computer, the computer is enabled to perform any one of the foregoing methods.

According to a seventh aspect, this application provides a computer program product including an instruction. When the computer program product is run on a computer, the computer is enabled to perform any one of the foregoing methods.

According to an eighth aspect, this application provides a chip. The chip is coupled to a memory, and is configured to read and execute a program instruction stored in the memory, to implement any one of the foregoing methods.

## BRIEF DESCRIPTION OF DRAWINGS

FIG. 1 is a schematic structural diagram of a communications system according to this application;
FIG. 2 is a schematic diagram of a DRX cycle according to this application;
FIG. 3 is a schematic diagram of data scheduling according to this application;
FIG. 4 is a flowchart of a communication method according to this application;
FIG. 5 is a schematic diagram of receiving first information by a terminal device according to this application;
FIG. 6 is a flowchart of another communication method according to this application;
FIG. 7 is a schematic diagram of an effective time of a minimum value of a first slot difference according to this application;
FIG. 8 is a schematic diagram of effective times of minimum values of a first slot difference and a second slot difference according to this application;
FIG. 9 is a schematic structural diagram of a terminal device according to this application;
FIG. 10 is a schematic structural diagram of a network device according to this application;
FIG. 11 is a structural diagram of a terminal device according to this application; and
FIG. 12 is a structural diagram of a network device according to this application.

## DESCRIPTION OF EMBODIMENTS

The following further describes this application in detail with reference to accompanying drawings.

This application provides a communication method and an apparatus, to indicate an effective time of BWP switching. The method and the apparatus of this application are based on a same technical concept. The method and the apparatus have similar principles for resolving problems. Therefore, for implementation of the apparatus and the method, refer to each other, and details of repeated parts are not described again.

In the descriptions of this application, terms such as "first" and "second" are merely used for distinction and description, and should not be understood as an indication or implication of relative importance or an indication or implication of an order.

To describe the technical solutions in the embodiments of this application more clearly, the following describes the communication method and the apparatus according to the embodiments of this application in detail with reference to accompanying drawings.

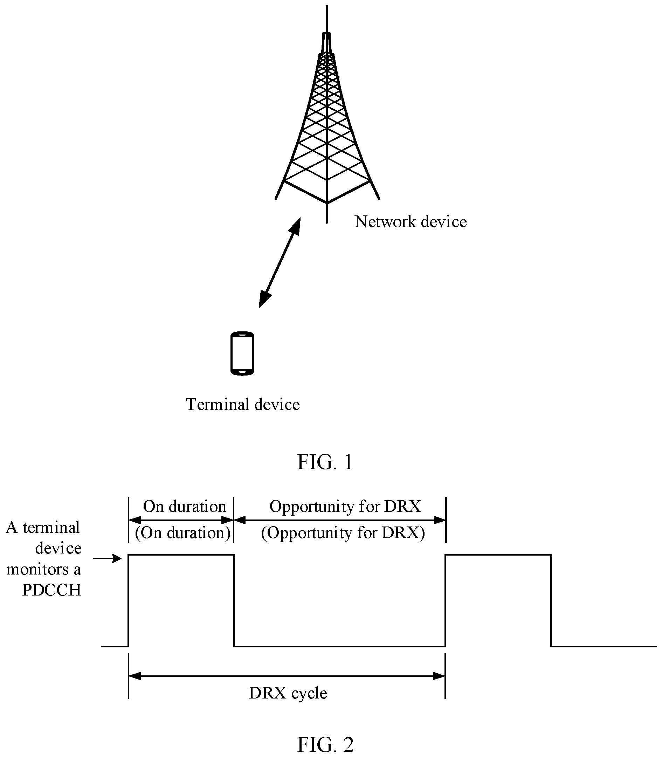

FIG. 1 shows an architecture of a possible communications system applicable to a communication method according to an embodiment of this application. The architecture of the communications system includes a network device and a terminal device.

The network device is a device that has a wireless transceiver function or a chip that can be disposed in the network device. The network device includes but is not limited to a gNB, a radio network controller (radio network controller, RNC), a NodeB (NodeB, NB), a base station controller (base station controller, BSC), a base transceiver station (base transceiver station, BTS), a home evolved NodeB (for example, a home evolved NodeB, or a home NodeB, HNB), a baseband unit (baseband unit, BBU), an access point (access point, AP) in a wireless fidelity (wireless fidelity, WIFI) system, a wireless relay node, a wireless backhaul node, a transmission and reception point (transmission and reception point, TRP, or transmission point, TP). The network device may alternatively be a network node that constitutes a gNB or a transmission point, for example, a baseband unit (BBU), or a distributed unit (distributed unit, DU).

In some embodiments, the gNB may include a centralized unit (centralized unit, CU) and a DU. The gNB may further include a radio unit (radio unit, RU). The CU implements some functions of the gNB, and the DU implements some functions of the gNB. For example, the CU implements functions of a radio resource control (radio resource control, RRC) layer and a packet data convergence protocol (packet data convergence protocol, PDCP) layer, and the DU implements functions of a radio link control (radio link control, RLC) layer, a media access control (media access control, MAC) layer, and a physical (physical, PHY) layer. Information at the RRC layer is eventually converted into information at the PHY layer, or is converted from information at the PHY layer. Therefore, in this architecture, higher layer signaling such as RRC layer signaling or PHCP layer signaling may also be considered as being sent by the DU or by the DU and the RU. It may be understood that the network device may be a CU node, a DU node, or a device including a CU node and a DU node. In addition, the CU may be classified as a network device in an access network RAN, or the CU may be classified as a network device in a core network CN. This is not limited herein.

The terminal device may be referred to as user equipment (user equipment, UE), an access terminal, a subscriber unit, a subscriber station, a mobile station, a mobile console, a remote station, a remote terminal, a mobile device, a user terminal, a terminal, a wireless communications device, a user agent, or a user apparatus. The terminal device in the embodiments of this application may be a mobile phone (mobile phone), a tablet computer (Pad), a computer having a wireless transceiver function, a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like. An application scenario is not limited in the embodiments of this application. In this application, a terminal device having a wireless transceiver function and a chip that can be disposed in the terminal device are collectively referred to as a terminal device.

It should be noted that the communications system shown in FIG. 1 may be but is not limited to a 5th generation (5th Generation, 5G) system, for example, a new radio access technology (new radio access technology, NR). Optionally, the method in the embodiments of this application is further applicable to various future communications systems, for example, a 6G system or another communications network.

To facilitate understanding of the embodiments of this application, the following first describes concepts and basic knowledge related to the embodiments of this application.

(1) DRX cycle, which may include "on duration" and an "opportunity for DRX" shown in FIG 2. A terminal device listens to and receives a PDCCH within the "on duration", and the "on duration" may be considered as an active time. Within the "opportunity for DRX", the terminal device may not listen to or receive the PDCCH, and this reduces power consumption. The opportunity for DRX may be considered as a dormant time. It should be noted that, that the terminal device receives the PDCCH means that the terminal device receives DCI carried on the PDCCH.

(2) Scheduling manner of a network device in an NR release 15

When the network device schedules a terminal device to receive downlink data, or when the network device schedules a terminal device to send uplink data, the network device first sends scheduling information (PDCCH). The scheduling information indicates transmission parameters of a PDSCH (downlink data) or a physical uplink shared channel (physical uplink shared channel, PUSCH) (uplink data). These transmission parameters include a time domain resource position of the PDSCH/PUSCH.

Specifically, the time domain resource position includes a slot in which the PDSCH/PUSCH is located, and a start position and a length of a symbol occupied by the PDSCH/PUSCH in the slot.

In terms of a process, in an example of a downlink, the network device first configures a time domain resource allocation (time domain resource allocation, TDRA) table for the terminal device. This table can be divided into 4 columns. The first column is an index (index), and the index is used to index other parameters in a row. The second column is K0 (or K2 in an uplink). The value indicates a slot difference between a slot in which the PDCCH is located and a slot in which the PDSCH is located. For example, K0=0 indicates that the PDCCH and the PDSCH are in a same slot, and KO=1 indicates that the PDSCH is in a next slot of the PDCCH. The third column is a starting and length indication value (starting and length indication value, SLIV). The value indicates a start symbol and a symbol length that are of a symbol occupied by the PDSCH in a slot. The value is jointly encoded. If S represents a sequence number of the start symbol, and L represents the symbol length, the SLIV is obtained by using S and L according to a rule. The fourth column is a mapping type (mapping type), including a mapping type A and a mapping type B.

For example, Table 1 is a downlink TDRA table, and Table 2 is an uplink TDRA table.

**Table 1**

| Index | K0 | SLIV | Mapping type |
|-------|----|------|--------------|
| 0 | 0 | 66 | A |
| 1 | 1 | 27 | B |
| 2 | 1 | 101 | B |

**Table 2**

| Index | K2 | SLIV | Mapping type |
|-------|----|------|--------------|
| 0 | 2 | 27 | B |
| 1 | 2 | 91 | B |

After the network device configures the TDRA table for the terminal device, when scheduling data transmission, the network device indicates an index on the PDCCH, and the terminal device may obtain a time domain resource position through table lookup based on the index and the configured table. Then, the terminal device receives/sends data in the determined position.

In the foregoing scheduling manner, if the PDCCH and the PDSCH (or PUSCH) are in a same slot, it is referred to as intra-slot scheduling (corresponding to a case in which K0=0 or K2=0). If the PDCCH and the PDSCH (or PUSCH) are in different slots, it is referred to as cross-slot scheduling (corresponding to a case in which K0>0 or K2>0). It is clearly that the cross-slot scheduling causes a larger transmission delay.

Before the terminal device successfully decodes the PDCCH, the terminal device does not know the index indicated in the PDCCH. In an example of a downlink, if the TDRA table configured by the network device for the terminal device includes both a case in which K0=0 and a case in which K0>0, before decoding the PDCCH, the terminal device does not know whether current scheduling is an intra-slot scheduling or a cross-slot scheduling.

(3) BWP: 5G NR supports a concept of the BWP, to be specific, supports transmission between a network device and a terminal device by occupying a bandwidth part. A 5G system bandwidth (the system bandwidth herein is a bandwidth of a carrier, and corresponds to a bandwidth of each carrier component (carrier component, CC) in a carrier aggregation (carrier aggregation, CA) scenario or a dual connectivity (dual connectivity, DC) scenario) may be very large, for example, 200 MHz or 400 MHz, and some terminal devices cannot support such a large bandwidth. Therefore, the network device may configure a BWP (a part of the system bandwidth) for the terminal device, for example, 20 MHz. The terminal device may communicate with the network device on the BWP of 20 MHz.

Both a frequency division duplexing (frequency division duplexing, FDD) system and a time division duplexing (time division duplexing, TDD) system support the BWP. The BWP may be classified into a downlink BWP (downlink BWP, DL BWP) and an uplink BWP (uplink BWP, UL BWP). The network device may configure a plurality of DL BWPs and a plurality of UL BWPs for the terminal device, and activate at least one DL BWP and at least one UL BWP. The terminal device receives, on an active DL BWP (namely, the active DL BWP), a downlink signal sent by the network device. The downlink signal includes but is not limited to downlink control signaling and downlink data. The terminal device sends an uplink signal on an active UL BWP. The uplink signal includes but is not limited to uplink control signaling, uplink data, a scheduling request (scheduling request, SR), a sounding reference signal (sounding reference signal, SRS), and channel state information (channel state information, CSI)/channel quality indicator (channel quality indicator, CQI) feedback.

Parameters of the BWP include a numerology (translated as a system parameter or a parameter set), and are parameters such as a subcarrier spacing, a symbol length corresponding to the subcarrier spacing, and a cyclic prefix (cyclic prefix, CP) length.

In an existing standard, when the terminal device works in one cell, there is only one active DL BWP and one active UL BWP. However, an active BWP may be changed, and this is referred to as BWP switching. For example, the network device configures two DL BWPs for the terminal device: a DL BWP1 and a DL BWP2. ADL BWP activated by the terminal device is the DL BWP1. In this case, the network device may send a BWP switching indication (the switching indication is a PDCCH), to switch from the DL BWP of the terminal device to the DL BWP2. Likewise, the network device may also indicate, by using the PDCCH, to switch an UL BWP activated by the terminal device.

In the TDD system, the DL BWP and the UL BWP of the terminal device are always switched in pairs. To be specific, once the DL BWP is switched, the UL BWP is also automatically switched to a pre-paired UL BWP. However, in the FDD system, DL BWP switching of the terminal device is decoupled from UL BWP switching of the UE.

(4) Cross-slot scheduling in a topic of power consumption reduction in NR Rel-16

Standby time of the terminal device is an important part that affects user experience. A 5G NR system needs to support a larger bandwidth, a higher transmission rate, and a wider coverage area than a 4G long term evolution (long term evolution, LTE) system. Therefore, power consumption of an NR terminal device is higher than power consumption of an LTE terminal device. To ensure good user experience, the 3rd generation partnership project (3rd generation partnership project, 3GPP) initiates a topic of power consumption reduction of the terminal device in the Rel-16, and studies an optimization solution for reducing power consumption of the terminal device.

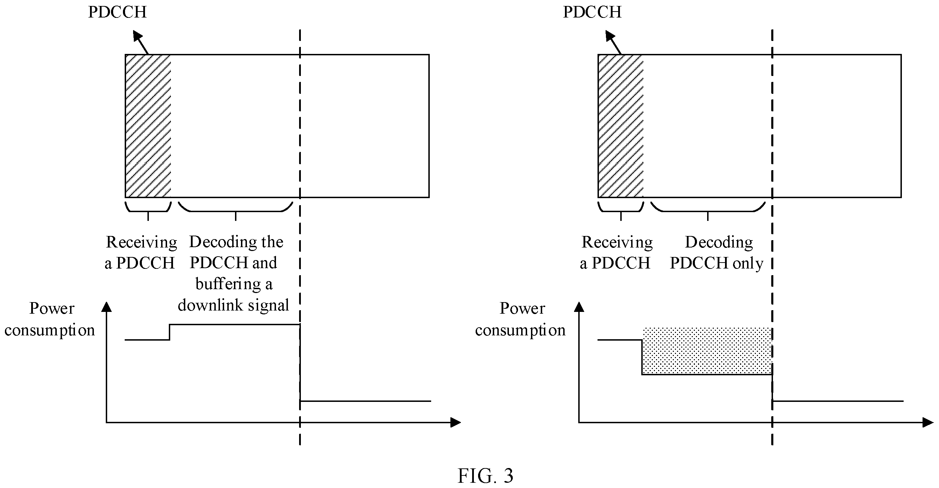

In the topic of power consumption reduction in NR, a company proposes that the scheduling manner in (2) is not conducive to energy saving of the terminal device. As shown on the left of FIG. 3, if the terminal device does not know whether intra-slot scheduling exists in a current slot (as long as a TDRA table configured by the network device includes K0=0, the intra-slot scheduling may exist), to avoid a signal loss, a downlink signal needs to be buffered when the terminal device decodes a PDCCH after receiving the PDCCH. As shown on the right of FIG. 3, if the terminal device can know in advance that no scheduling exists in the current slot, in a process in which the terminal device decodes the PDCCH after receiving the PDCCH, the terminal device may safely disable a radio frequency module, and does not buffer any signal. In this way, an energy saving effect can be achieved (a shadow part in the lower right corner of FIG. 3 is saved energy).

To reduce power consumption, in a discussion process of an existing standard, it has been agreed that the network device indicates a "minimum available value of K0" and/or a "minimum available value of K2" to the terminal device by using a power consumption reduction signal. After receiving the indication, the terminal device considers that when the network device schedules data of the terminal device, a K0/K2 value less than the "minimum value" is not indicated. In an example of a downlink, when the TDRA table configured by the network device for the terminal device is shown in Table 3, if the network device further indicates that the "minimum value of K0" is 1, the network device indicates only two rows of index=1 and index=2 in scheduling information when scheduling the terminal device, and does not indicate a row of index=0.

**Table 3**

| Index | K0 | SLIV | Mapping type |
| --- | --- | --- | --- |
| 0 | 0 | 66 | A |
| 1 | 1 | 27 | B |
| 2 | 1 | 101 | B |

Currently, to reduce power consumption of the terminal device, some researches indicate that the currently introduced power consumption reduction signal may be used to carry BWP switching information. However, in this way, the power consumption reduction signal does not carry data scheduling information, and an effective time of BWP switching is not clear. Based on this, this application provides a communication method, to indicate the effective time of the BWP switching. The following describes in detail the communication method provided in this application with reference to specific embodiments.

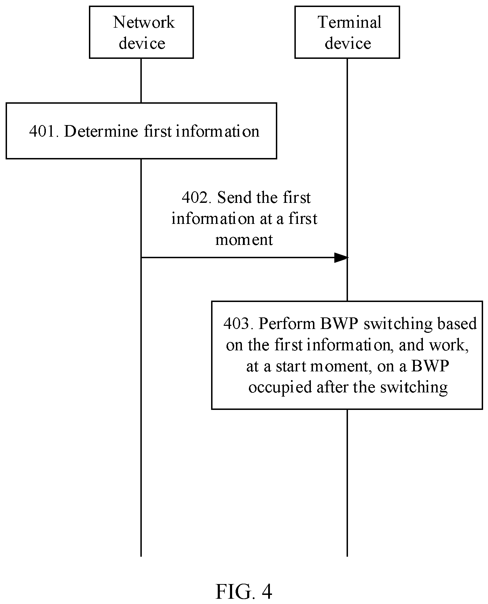

A communication method provided in an embodiment of this application is applicable to the communications system shown in FIG. 1. Referring to FIG. 4, a specific procedure of the method may include the following steps:

Step 401: A network device determines first information, where the first information is used to indicate BWP switching and indicate a start moment at which a terminal device works on a BWP occupied after the switching, and the start moment is a start moment of on duration in a DRX cycle.

Step 402: The network device sends the first information to the terminal device at a first moment, where the first moment is before the on duration.

Step 403: The terminal device performs the BWP switching based on the first information, and works, at the start moment, on the BWP occupied after the switching.

In an implementation, it may be predefined (or considered by default) that when sending the first information to the terminal device, the network device reserves sufficient time for the terminal device to perform the BWP switching. To be specific, it is predefined that a time interval between the first moment and the start moment of the on duration is greater than specified duration, and the specified duration is greater than or equal to duration for performing the BWP switching by the terminal device. In this implementation, the network device ensures that the time interval between the first moment and the start moment of the on duration is large enough, to ensure the time required by the terminal device to perform the BWP switching.

In another implementation, the network device may explicitly indicate that the time interval between the first moment and the start moment of the on duration is greater than the specified duration, and the specified duration is greater than or equal to the duration for performing the BWP switching by the terminal device. In this way, the terminal device can switch to a new BWP at the start moment of the on duration. In this case, the terminal device naturally works on the new BWP (to be specific, the BWP occupied after the switching) within the on duration.

In an optional implementation, when the network device may explicitly indicate, by using the first information, that the time interval between the first moment and the start moment of the on duration is greater than the specified duration, and the specified duration is greater than or equal to the duration for performing the BWP switching by the terminal device. For example, the first information is further used to indicate the terminal device to complete the BWP switching before the on duration. In this way, the first information is used to explicitly indicate the terminal device to complete the BWP switching before the on duration. It indicates that the time interval between the first moment and the start moment of the on duration is not less than the duration for performing the BWP switching by the terminal device.

Specifically, that the terminal device performs the BWP switching based on the first information may be: The terminal device completes the BWP switching based on the first information before the on duration.

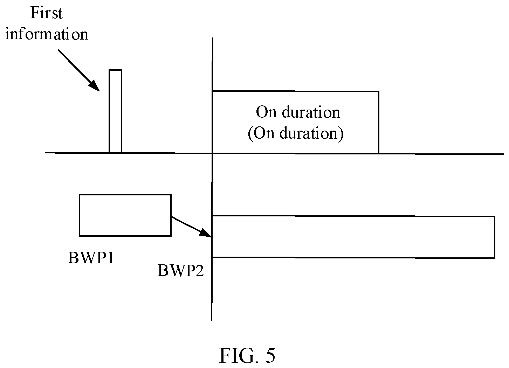

For example, FIG. 5 is a schematic diagram of receiving the first information by the terminal device. The terminal device can start to work, at the start moment of the on duration, on the BWP occupied after the switching, to be specific, can receive or send data on the BWP occupied after the switching.

According to the communication method provided in this embodiment of this application, the network device determines the first information, and sends the first information to the terminal device at the first moment, where the first information is used to indicate the bandwidth part BWP switching and indicate the start moment at which the terminal device works on the BWP occupied after the switching, and the start moment is the start moment of on duration on duration in a discontinuous reception DRX cycle. The terminal device performs the BWP switching based on the first information, and works, at the start moment, on the BWP occupied after the switching, where the first moment is before the on duration. According to the foregoing method, an effective time of the BWP switching can be indicated when the first information does not include data scheduling information. In this way, the start moment at which the terminal device works on the BWP occupied after the switching can be determined.

Currently, time required for works that needs to be completed when the terminal device performs the BWP switching includes: time for decoding DCI (to be specific, indication information for the BWP switching) by the terminal device, time for adjusting a radio frequency circuit and a baseband circuit by the terminal device, time required for mapping a new BWP and time required by the terminal device to apply a parameter on the new BWP. To be specific, finally, the effective time of the BWP switching cannot be earlier than a start time of any one of the foregoing four time periods. If only DCI decoding is considered, it is clearly improper to consider that a new minimum value of K0/K2 can take effect after the DCI is decoded. The terminal device has not switched to the new BWP at this time, and cannot apply the parameter on the new BWP.

In addition, an existing standard specifies that the effective time of the BWP switching is a start of a slot (slot) in which data scheduled by switching DCI is located. In a switching process, the terminal device does not receive or send any signal. Therefore, even if an effective time for the new minimum value of K0/K2 is defined earlier than the effective time of the BWP switching, the terminal device does not actually use these values. For example, time required by the terminal device to complete the foregoing four actions is 2 slots. However, the terminal device receives, in a slot n, downlink data scheduled by the network device in a slot n+4. In this case, the terminal device uses a start moment of the slot n+4 as the effective time of the new BWP, and the terminal device receives scheduling only after the effective time. It is meaningless for the terminal device to start to use the new minimum value of K0/K2 in a slot n+2.

Therefore, in an active time (active time) of the DRX cycle, when the network device indicates both the BWP switching and the minimum value of K0/K2 in a same piece of DCI, the effective time of the new minimum value of K0/K2 may need to be later. Therefore, the effective time of the new minimum value of K0/K2 needs to be redefined.

Based on this, this application provides another communication method, to indicate the effective time of the minimum value of K0/K2. The following describes in detail the communication method provided in this application with reference to specific embodiments.

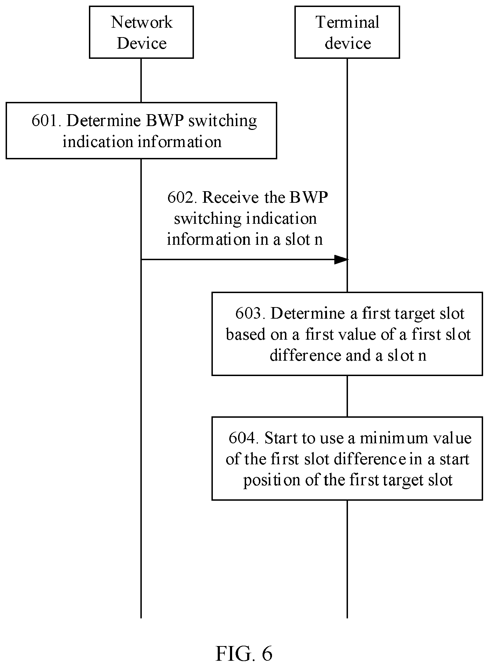

Another communication method provided in an embodiment of this application is applicable to the communications system shown in FIG. 1. Referring to FIG. 6, a specific procedure of the method may include the following steps:

Step 601: A network device determines BWP switching indication information, where the BWP switching indication information includes a first value and a minimum value of a first slot difference, and the first slot difference is an interval between a slot in which first data is transmitted and a slot n.

Step 602: A terminal device receives the BWP switching indication information from the network device in the slot n.

Step 603: The terminal device determines a first target slot based on a first value of the first slot difference and the slot n.

Step 604: The terminal device starts to use a minimum value of the first slot difference in a start position of the first target slot.

The BWP switching indication information may be DCI.

In an optical implementation, the BWP switching indication further includes a minimum value of a second slot difference. The second slot difference is an interval between a slot in which second data is transmitted and the slot n. The terminal device needs to perform the following operation: The terminal device determines a second target slot based on the first value of the first slot difference, the slot n, a first BWP, and a second BWP. The first BWP is a BWP occupied after the terminal device performs BWP switching based on the BWP switching indication information, and the second BWP is a BWP occupied after the terminal device performs the BWP switching based on the BWP switching indication information, or the second BWP is a BWP occupied before the terminal device performs the BWP switching based on the BWP switching indication information. The terminal device starts to use the minimum value of the second slot difference in a start position of the second target slot.

In a specific implementation, the first data may be downlink data (PDSCH data), or may be uplink data (PUSCH data). Correspondingly, when the first data is downlink data, the first slot difference is K0, and when the first data is uplink data, the first slot difference is K2. Further, when the first data is downlink data and the second data is uplink data, the second slot difference is K2; and when the first data is uplink data and the second data is downlink data, the second slot difference is K0.

In an example, when the first data is downlink data, the terminal device may determine the first target slot based on the first value of the first slot difference and the slot n according to the following formula 1:

$$A= \left\lfloor n \bullet \frac{2^{\mu_{PDSCH}}}{2^{\mu_{PDCCH}}} \right\rfloor +X \qquad \text{formula 1}$$

A is an index value of the first target slot, X is the first value of the first slot difference, $\mu_{PDSCH}$ is a numerology (numerology) of a BWP on which the first data is located, and $\mu_{PDCCH}$ is a numerology of a BWP on which the switching indication information is located.

Further, when the first data is downlink data, and the second data is uplink data, the terminal device may determine the second target slot based on the first value of the first slot difference, the slot n, the first BWP, and the second BWP according to the following formula 2:

$$B= \left\lceil \left( \left\lfloor n \cdot \frac{2^{\mu_{PDSCH}}}{2^{\mu_{PDCCH}}} \right\rfloor +X \right) \cdot \frac{2^{\mu_{UL,BWP}}}{2^{\mu_{DL,BWP}}} \right\rceil \qquad \text{formula 2}$$

B is an index value of the second target slot, X is the first value of the first slot difference, $\mu_{PDSCH}$ is a numerology of a BWP on which the first data is located, $\mu_{PDCCH}$ is a numerology of a BWP on which the switching indication information is located, $\mu_{DL,BWP}$ is a numerology of the first BWP, the first BWP is a downlink BWP, is a numerology of the second BWP, and the second BWP is an uplink BWP. Herein, to be specific, the first BWP is a downlink BWP occupied after the switching, and the second BWP is an uplink BWP occupied after the switching or the second BWP is a current uplink BWP (an uplink BWP occupied before the switching).

It should be noted that, if a current system is a TDD system, a DL BWP and a UL BWP are simultaneously switched. In this case, the second BWP is the uplink BWP occupied after the switching. If a current system is an FDD system, when a DL BWP is switched, a UL BWP is not switched. In this case, the second BWP is the current uplink BWP.

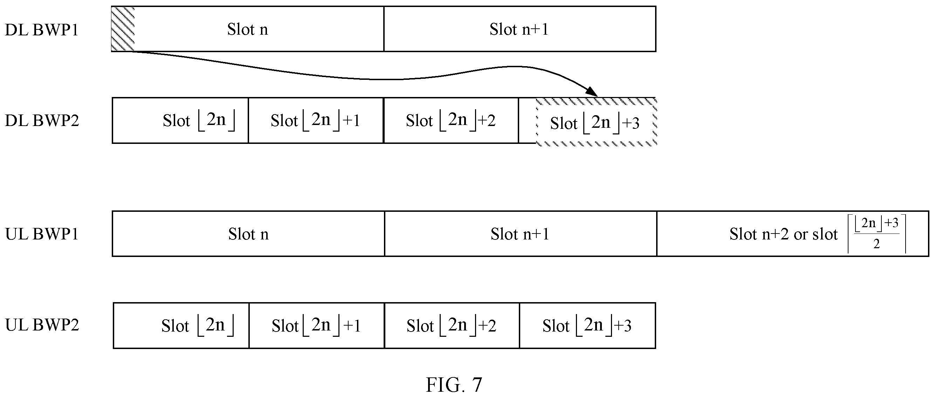

For example, FIG. 7 is a schematic diagram of the effective time of the minimum value of the first slot difference. In FIG. 7, the terminal device works in the FDD system, to be specific, the DL BWP and the UL BWP are separately switched. The first slot difference is K0, and the second slot difference is K2. The terminal device receives a BWP switching indication in the slot n, to indicate to switch the DL BWP to a DL BWP2, where a value X of K0 indicated in the BWP switching indication is equal to 3. In addition, the indication further indicates a new minimum value of K0. Therefore, as shown in FIG. 7, according to the formula 1, the new minimum value of K0 starts to take effect from a start position of a slot $\lfloor 2n \rfloor +3$ on the DL BWP2 for the terminal device. If the indication further indicates a new minimum value of K2, according to the formula 2, the new minimum value of K2 starts to take effect from a start position of a slot

$$\frac{\lfloor 2n \rfloor +3}{2}$$

on the UL BWP1 for the terminal device.

In another example, when the first data is uplink data, the terminal device may determine the first target slot based on the first value of the first slot difference and the slot n according to the following formula 3:

$$A= \left\lfloor n \cdot \frac{2^{\mu_{PUSCH}}}{2^{\mu_{PDCCH}}} \right\rfloor +X \qquad \text{formula 3}$$

A is an index value of the first target slot, X is the first value of the first slot difference, $\mu_{PUSCH}$ is a numerology of a BWP on which the first data is located, and $\mu_{PDCCH}$ is a numerology of a BWP on which the switching indication information is located.

Further, when the first data is downlink data, and the second data is uplink data, the terminal device may determine the second target slot based on the first value of the first slot difference, the slot n, the first BWP, and the second BWP according to the following formula 4:

$$B = \left\lceil \left( \left\lfloor n \cdot \frac{2^{\mu_{PUSCH}}}{2^{\mu_{PDCCH}}} \right\rfloor + X \right) \cdot \frac{2^{\mu_{DL,BWP}}}{2^{\mu_{UL,BWP}}} \right\rceil \qquad \text{formula 4}$$

B is an index value of the second target slot, X is the first value of the first slot difference, $\mu_{PDSCH}$ is a numerology of a BWP on which the first data is located, $\mu_{PDCCH}$ is a numerology of a BWP on which the switching indication information is located, $\mu_{UL,BWP}$ is a numerology of the first BWP, the first BWP is an uplink BWP, $\mu_{DL,BWP}$ is a numerology of the second BWP, and the second BWP is a downlink BWP. Herein, to be specific, the first BWP is an uplink BWP occupied after the switching, and the second BWP is a downlink BWP occupied after the switching or the second BWP is a current downlink BWP (a downlink BWP occupied before the switching).

It should be noted that, if a current system is a TDD system, a DL BWP and a UL BWP are simultaneously switched. In this case, the second BWP is the downlink BWP occupied after the switching. If a current system is an FDD system, when a DL BWP is switched, a UL BWP is not switched. In this case, the second BWP is the current downlink BWP.

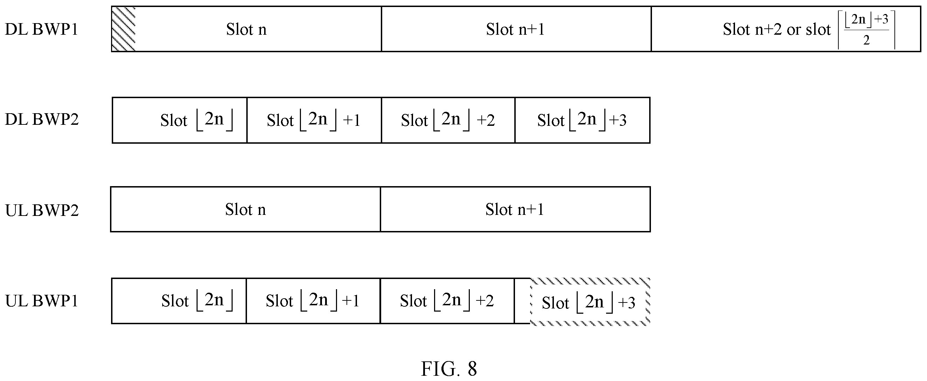

For example, FIG. 8 is a schematic diagram of effective times of minimum values of the first slot difference and the second slot difference. In FIG. 8, the terminal device works in the FDD system, to be specific, the DL BWP and the UL BWP are separately switched. The first slot difference is K2, and the second slot difference is K0. The terminal device receives a BWP switching indication in a slot n, to indicate to switch the UL BWP to a UL BWP2, where a value X of K2 indicated in the BWP switching indication is equal to 3. In addition, the indication further indicates a new minimum value of K0 and a new minimum value of K2. Therefore, as shown in FIG. 8, according to the formula 3, the new minimum value of K0 starts to take effect from a start position of a slot $\lfloor 2n \rfloor + 3$ on the UL BWP2 for the terminal device. If the indication further indicates a new minimum value of K2, according to the formula 4, the new minimum value of K0 starts to take effect from a start position of a slot $\dfrac{\lfloor 2n \rfloor + 3}{2}$ on a DL BWP1 for the terminal device.

According to the communication method provided in this embodiment of this application, the network device determines the BWP switching indication information, and sends the BWP switching indication information to the terminal device in the slot n. The BWP switching indication information includes the first value and the minimum value of the first slot difference, and the first slot difference is the interval between the slot in which the first data is transmitted and the slot n. The terminal device determines the first target slot based on the first value of the first slot difference and the slot n, and starts to use the minimum value of the first slot difference in the start position of the first target slot. In this way, the effective time of the minimum value of K0 or K2 may be determined while the BWP switching and the minimum value of K0 or K2 are indicated.

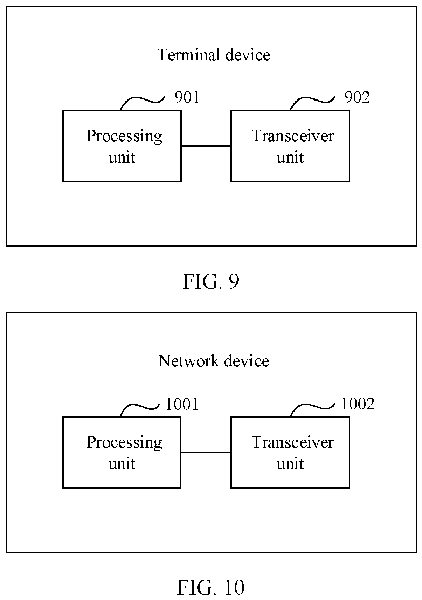

Based on the foregoing embodiments, an embodiment of this application further provides a terminal device. The terminal device is applied to the communications system shown in FIG. 1. The terminal device may be configured to implement functions of the terminal device in the communication method shown in FIG. 4 or FIG. 6. Referring to FIG. 9, the terminal device may include a processing unit 901 and a transceiver unit 902.

In an embodiment, that the terminal device implements functions of the terminal device in the communication method shown in FIG. 4 may be specifically:

The transceiver unit 902 is configured to receive first information from a network device at a first moment, where the first information is used to indicate BWP switching and indicate a start moment at which the terminal device works on a BWP occupied after the switching, the start moment is a start moment of on duration on duration in a DRX cycle, and the first moment is before the on duration. The processing unit 901 is configured to: perform the BWP switching based on the first information, and work, at the start moment, on the BWP occupied after the switching.

For example, a time interval between the first moment and the start moment of the on duration is greater than specified duration, and the specified duration is greater than or equal to duration for performing the BWP switching by the terminal device.

In a specific implementation, the first information is further used to indicate the terminal device to complete the BWP switching before the on duration. When performing the BWP switching based on the first information, the processing unit 901 is specifically configured to complete the BWP switching based on the first information before the on duration.

In another embodiment, that the terminal device implements functions of the terminal device in the communication method shown in FIG. 6 may be specifically:

The transceiver unit 902 is configured to receive BWP switching indication information from the network device in a slot n, where the BWP switching indication information includes a first value and a minimum value of a first slot difference, and the first slot difference is an interval between a slot in which first data is transmitted and the slot n. The processing unit 901 is configured to: determine a first target slot based on the first value of the first slot difference and the slot n, and start to use the minimum value of the first slot difference in a start position of the first target slot.

In a specific implementation, the BWP switching indication further includes a minimum value of a second slot difference, and the second slot difference is an interval between a slot in which the second data is transmitted and the slot n. The processing unit 901 is further configured to: determine a second target slot based on the first value of the first slot difference, the slot n, a first BWP, and a second BWP, where the first BWP is a BWP occupied after the terminal device performs BWP switching based on the BWP switching indication information, and the second BWP is a BWP occupied after the terminal device performs the BWP switching based on the BWP switching indication information, or the second BWP is a BWP occupied before the terminal device performs the BWP switching based on the BWP switching indication information; and start to use the minimum value of the second slot difference in a start position of the second target slot.

In an example, when the first data is downlink data, the processing unit 901 may determine the first target slot based on the first value of the first slot difference and the slot n according to the following formula:

$$A = \left\lfloor n \bullet \frac{2^{\mu_{\text{PDSCH}}}}{2^{\mu_{\text{PDCCH}}}} \right\rfloor + X,$$

where

A is an index value of the first target slot, X is the first value of the first slot difference, $\mu_{\text{PDSCH}}$ is a numerology of a BWP on which the first data is located, and $\mu_{\text{PDCCH}}$ is a numerology of a BWP on which the switching indication information is located.

Specifically, when the first data is downlink data, and the second data is uplink data, the processing unit 901 may determine the second target slot based on the first value of the first slot difference, the slot n, the first BWP, and the second BWP according to the following formula:

$$B = \left\lceil \left( \left\lfloor n \cdot \frac{2^{\mu_{\text{PDSCH}}}}{2^{\mu_{\text{PDCCH}}}} \right\rfloor + X \right) \cdot \frac{2^{\mu_{\text{UL,BWP}}}}{2^{\mu_{\text{DL,BWP}}}} \right\rceil,$$

where

B is an index value of the second target slot, X is the first value of the first slot difference, $\mu_{\text{PDSCH}}$ is a numerology of a BWP on which the first data is located, $\mu_{\text{PDCCH}}$ is a numerology of a BWP on which the switching indication information is located, $\mu_{\text{DL,BWP}}$ is a numerology of the first BWP, the first BWP is a downlink BWP, $\mu_{\text{UL,BWP}}$ is a numerology of the second BWP, and the second BWP is an uplink BWP.

In another example, when the first data is uplink data, the processing unit 901 may determine the first target slot based on the first value of the first slot difference and the slot n according to the following formula:

$$A = \left\lfloor n \cdot \frac{2^{\mu_{\text{PUSCH}}}}{2^{\mu_{\text{PDCCH}}}} \right\rfloor + X,$$

where

A is an index value of the first target slot, X is the first value of the first slot difference, $\mu_{\text{PUSCH}}$ is a numerology of a BWP on which the first data is located, and $\mu_{\text{PDCCH}}$ is a numerology of a BWP on which the switching indication information is located.

Specifically, when the first data is downlink data, and the second data is uplink data, the processing unit 901 may determine the second target slot based on the first value of the first slot difference, the slot n, the first BWP, and the second BWP according to the following formula:

$$B = \left\lceil \left( \left\lfloor n \cdot \frac{2^{\mu_{\text{PUSCH}}}}{2^{\mu_{\text{PDCCH}}}} \right\rfloor + X \right) \cdot \frac{2^{\mu_{\text{DL,BWP}}}}{2^{\mu_{\text{UL,BWP}}}} \right\rceil,$$

where

B is an index value of the second target slot, X is the first value of the first slot difference, $u_{PDCCH}$ is a numerology of a BWP on which the first data is located, $\mu_{PDCCH}$ is a numerology of a BWP on which the switching indication information is located, $\mu_{UL,BWP}$ is a numerology of the first BWP, the first BWP is an uplink BWP, and $\mu_{DL,BWP}$ is a numerology of the second BWP, and the second BWP is a downlink BWP.

Based on the foregoing embodiments, an embodiment of this application further provides a network device. The network device is applied to the communications system shown in FIG. 1. The network device may be configured to implement the communication method shown in FIG. 4 or FIG. 6. Referring to FIG. 10, the network device may include a processing unit 1001 and a transceiver unit 1002.

In an embodiment, that the network device implements functions of the network device in the communication method shown in FIG. 4 may be specifically:

The processing unit 1001 is configured to determine first information, where the first information is used to indicate bandwidth part BWP switching and indicate a start moment at which a terminal device works on a BWP occupied after the switching, and the start moment is a start moment of on duration on duration in a discontinuous reception DRX cycle. The transceiver unit 1002 is configured to send the first information to the terminal device at a first moment, where the first moment is before the on duration.

Specifically, a time interval between the first moment and the start moment of the on duration is greater than specified duration, and the specified duration is greater than or equal to duration for performing the BWP switching by the terminal device.

In an example, the first information is further used to indicate the terminal device to complete the BWP switching before the on duration.

In another embodiment, that the network device implements functions of the network device in the communication method shown in FIG. 6 may be specifically:

The processing unit 1001 is configured to determine BWP switching indication information, where the BWP switching indication information includes a first value and a minimum value of a first slot difference, and the first slot difference is an interval between a slot in which first data is transmitted and a slot n. The transceiver unit 1002 is configured to send the BWP switching indication information to a terminal device in the slot n.

For example, the BWP switching indication further includes a minimum value of a second slot difference, and the second slot difference is an interval between a slot in which second data is transmitted and the slot n.

It should be noted that, in the embodiments of this application, division in to units is an example, and is merely logical function division. In actual implementation, another division manner may be used. Function units in the embodiments of this application may be integrated into one processing unit, or each of the units may exist alone physically, or two or more units are integrated into one unit. The integrated unit may be implemented in a form of hardware, or may be implemented in a form of a software function unit.

When the integrated unit is implemented in the form of a software function unit and sold or used as an independent product, the integrated unit may be stored in a computer readable storage medium. Based on such an understanding, the technical solutions of this application essentially, or the part contributing to the prior art, or all or some of the technical solutions may be implemented in a form of a software product. The computer software product is stored in a storage medium and includes several instructions for instructing a computer device (which may be a personal computer, a server, or a network device) or a processor (processor) to perform all or some of the steps of the methods described in the embodiments of this application. The storage medium includes any medium that can store program code, such as a USB flash drive, a removable hard disk, a read-only memory (read-only memory, ROM), a random access memory (random access memory, RAM), a magnetic disk, or an optical disc.

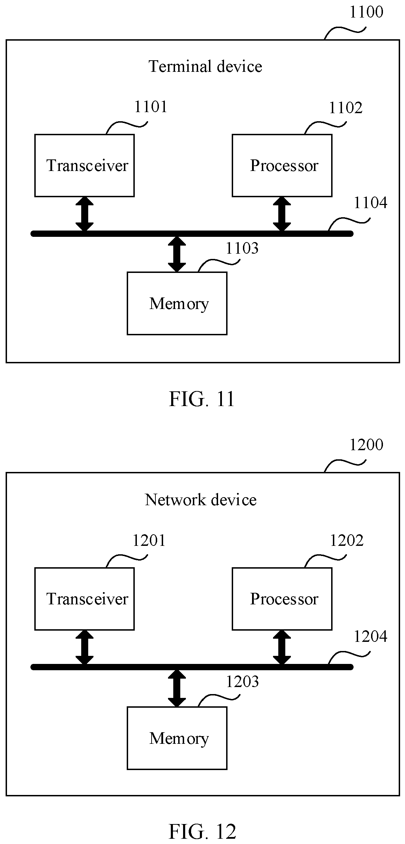

Based on the foregoing embodiments, an embodiment of this application further provides a terminal device. The terminal device is configured to implement functions of the terminal device in the communication method shown in FIG. 4 or FIG. 6. Referring to FIG. 11, the terminal device includes a transceiver 1101 and a processor 1102.

The processor 1102 may be a central processing unit (central processing unit, CPU), a network processor (network processor, NP), or a combination of the CPU and the NP. The processor 1102 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field programmable logic gate array (field programmable gate array, FPGA), generic array logic (generic array logic, GAL), or any combination thereof. The processor 1102 may implement the foregoing functions by hardware or by hardware executing corresponding software.

The transceiver 1101 and the processor 1102 are connected to each other. Optionally, the transceiver 1101 and the processor 1102 are connected to each other through a bus 1104. The bus 1104 may be a peripheral component interconnect (Peripheral Component Interconnect, PCI) bus, an extended industry standard architecture (Extended Industry Standard Architecture, EISA) bus, or the like. The bus may be classified into an address bus, a data bus, a control bus, and the like. For ease of indication, only one thick line is used to represent the bus 1104 in FIG. 11, but it does not mean that there is only one bus or only one type of bus.

Optionally, the terminal device may further include a memory 1103, and the memory 1103 is configured to store a program and the like. Specifically, the program may include program code, and the program code includes a computer operation instruction. The memory 1103 may include a RAM, and may further include a non-volatile memory (non-volatile memory), for example, at least one magnetic disk storage. The processor 1102 performs an application program stored in the memory 1103 to implement the foregoing functions, to implement the communication method shown in FIG 4 or FIG. 6.

In an embodiment, that the terminal device implements the functions of the terminal device in the communication method shown in FIG. 4 may be specifically:

The transceiver 1101 is configured to receive first information from a network device at a first moment, where the first information is used to indicate BWP switching and indicate a start moment at which the terminal device works on a BWP occupied after the switching, the start moment is a start moment of on duration on duration in a DRX cycle, and the first moment is before the on duration. The processor 1102 is configured to: perform the BWP switching based on the first information, and work, at the start moment, on the BWP occupied after the switching.

For example, a time interval between the first moment and the start moment of the on duration is greater than specified duration, and the specified duration is greater than or equal to duration for performing the BWP switching by the terminal device.

In a specific implementation, the first information is further used to indicate the terminal device to complete the BWP switching before the on duration. When performing the BWP switching based on the first information, the processor 1102 is specifically configured to complete the BWP switching based on the first information before the on duration.

In another embodiment, that the terminal device implements the functions of the terminal device in the communication method shown in FIG. 6 may be specifically:

The transceiver 1101 is configured to receive BWP switching indication information from a network device in a slot n, where the BWP switching indication information includes a first value and a minimum value of a first slot difference, and the first slot difference is an interval between a slot in which first data is transmitted and a slot n. The processor 1102 is configured to: determine a first target slot based on the first value of the first slot difference and the slot n, and start to use the minimum value of the first slot difference in a start position of the first target slot.

In a specific implementation, the BWP switching indication further includes a minimum value of a second slot difference, and the second slot difference is an interval between a slot in which second data is transmitted and the slot n. The processor 1102 is further configured to: determine a second target slot based on the first value of the first slot difference, the slot n, a first BWP, and a second BWP, where the first BWP is a BWP occupied after the terminal device performs BWP switching based on the BWP switching indication information, and the second BWP is a BWP occupied after the terminal device performs the BWP switching based on the BWP switching indication information, or the second BWP is a BWP occupied before the terminal device performs the BWP switching based on the BWP switching indication information; and start to use the minimum value of the second slot difference in a start position of the second target slot.

In an example, when the first data is downlink data, the processor 1102 may determine the first target slot based on the first value of the first slot difference and the slot n according to the following formula:

$$A = \left\lfloor n \bullet \frac{2^{\mu_{PDSCH}}}{2^{\mu_{PDCCH}}} \right\rfloor + X,$$

where

A is an index value of the first target slot, X is the first value of the first slot difference, $\mu_{PDSCH}$ is a numerology of a BWP on which the first data is located, and $\mu_{PDCCH}$ is a numerology of a BWP on which the switching indication information is located.

Specifically, when the first data is downlink data, and the second data is uplink data, the processor 1102 may determine the second target slot based on the first value of the first slot difference, the slot n, the first BWP, and the second BWP according to the following formula:

$$B = \left\lceil \left( \left\lfloor n \cdot \frac{2^{\mu_{PDSCH}}}{2^{\mu_{PDCCH}}} \right\rfloor + X \right) \cdot \frac{2^{\mu_{UL,BWP}}}{2^{\mu_{DL,BWP}}} \right\rceil,$$

where

B is an index value of the second target slot, X is the first value of the first slot difference, $u_{PDCCH}$ is a numerology of a BWP on which the first data is located, $\mu_{PDCCH}$ is a numerology of a BWP on which the switching indication information is located, $\mu_{DL,BWP}$ is a numerology of the first BWP, the first BWP is a downlink BWP, $\mu_{UL,BWP}$ is a numerology of the second BWP, and the second BWP is an uplink BWP.

In another example, when the first data is uplink data the processor 1102 may determine the first target slot based on the first value of the first slot difference and the slot n according to the following formula:

$$A = \left\lfloor n \cdot \frac{2^{\mu_{PUSCH}}}{2^{\mu_{PDCCH}}} \right\rfloor + X,$$

where

A is an index value of the first target slot, X is the first value of the first slot difference, $\mu_{PUSCH}$ is a numerology of a BWP on which the first data is located, and $\mu_{PDCCH}$ is a numerology of a BWP on which the switching indication information is located.

Specifically, when the first data is downlink data, and the second data is uplink data, the processor 1102 may determine the second target slot based on the first value of the first slot difference, the slot n, the first BWP, and the second BWP according to the following formula:

$$B = \left\lfloor \left( \left\lfloor n \cdot \frac{2^{\mu_{PUSCH}}}{2^{\mu_{PDCCH}}} \right\rfloor + X \right) \cdot \frac{2^{\mu_{DL,BWP}}}{2^{\mu_{UL,BWP}}} \right\rfloor,$$

where

B is an index value of the second target slot, X is the first value of the first slot difference, $u_{PDSCH}$ is a numerology of a BWP on which the first data is located, $\mu_{PDCCH}$ is a numerology of a BWP on which the switching indication information is located, $\mu_{UL,BWP}$ is a numerology of the first BWP, the first BWP is an uplink BWP, and $\mu_{DL,BWP}$ is a numerology of the second BWP, and the second BWP is a downlink BWP.

Based on the foregoing embodiments, an embodiment of this application further provides a network device. The network device is configured to implement functions of the network device in the communication method shown in FIG. 4 or FIG. 6. Referring to FIG. 12, the network device includes: a transceiver 1201 and a processor 1202.

The processor 1202 may be a central processing unit (central processing unit, CPU), a network processor (network processor, NP), or a combination of the CPU and the NP. The processor 1202 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), afield-programmable logic gate array (field-programmable gate array, FPGA), generic array logic (generic array logic, GAL), or any combination thereof. The processor 1202 may implement the foregoing functions by hardware or by hardware executing corresponding software.

The transceiver 1201 and the processor 1202 are connected to each other. Optionally, the transceiver 1201 and the processor 1202 are connected to each other through a bus 1204. The bus 1204 may be a peripheral component interconnect (Peripheral Component Interconnect, PCI) bus, an extended industry standard architecture (Extended Industry Standard Architecture, EISA) bus, or the like. The bus may be classified into an address bus, a data bus, a control bus, and the like. For ease of indication, only one thick line is used to represent the bus in FIG. 12, but it does not mean that there is only one bus or only one type of bus.

Optionally, the network device may further include a memory 1203, and the memory 1203 is configured to store a program and the like. Specifically, the program may include program code, and the program code includes a computer operation instruction. The memory 1203 may include a RAM, and may further include a non-volatile memory (non-volatile memory), for example, at least one magnetic disk storage. The processor 1202 performs an application program stored in the memory 1203 to implement the foregoing functions, to implement the communication method shown in FIG 4 or FIG. 6.

In an embodiment, that the network device implements the functions of the network device in the communication method shown in FIG. 4 may be specifically:

The processor 1202 is configured to determine first information, where the first information is used to indicate bandwidth part BWP switching and indicate a start moment at which a terminal device works on a BWP occupied after the switching, and the start moment is a start moment of on duration on duration in a discontinuous reception DRX cycle. The transceiver 1201 is configured to send the first information to the terminal device at a first moment, where the first moment is before the on duration.

Specifically, a time interval between the first moment and the start moment of the on duration is greater than specified duration, and the specified duration is greater than or equal to duration for performing the BWP switching by the terminal device.

In an example, the first information is further used to indicate the terminal device to complete the BWP switching before the on duration.

In another embodiment, that the network device implements the functions of the network device in the communication method shown in FIG. 6 may be specifically:

The processor 1202 is configured to determine BWP switching indication information, where the BWP switching indication information includes a first value and a minimum value of a first slot difference, and the first slot difference is an interval between a slot in which first data is transmitted and a slot n. The transceiver 1201 is configured to send the BWP switching indication information to the terminal device in the slot n.

For example, the BWP switching indication information further includes a minimum value of a second slot difference, and the second slot difference is an interval between a slot in which second data is transmitted and the slot n.

A person skilled in the art should understand that the embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer usable storage media (including but not limited to a disk memory, a CD-ROM, an optical memory, and the like) that include computer usable program code.

This application is described with reference to the flowcharts and/or block diagrams of the method, the device (system), and the computer program product according to the embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a special-purpose computer, an embedded processor, or a processor of another programmable data processing device to generate a machine, so that the instructions executed by a computer or the processor of another programmable data processing device generate an apparatus for implementing a specific function in one or more processes in the flowcharts and/or in one or more blocks in the block diagrams.

These computer program instructions may be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may be loaded onto a computer or another programmable data processing device, so that a series of operation steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

**Claims**

1.  A communication method, comprising:

    receiving (602), by a terminal device, BWP switching indication information from a network device in a slot n, wherein the BWP switching indication information comprises a first value and a minimum value of a first slot difference, and the first value is an interval between a first target slot in which first data is transmitted and the slot n, wherein the first data is scheduled by the BWP switching indication information;
    determining (603), by the terminal device, the first target slot based on the first value and the slot n; and
    starting (604), by the terminal device, to use the minimum value of the first slot difference in a start position of the first target slot, wherein after the minimum value is used, a new interval between receiving new scheduling information and transmitting new scheduling data scheduled by the new scheduling information is no less than the minimum value.

2.  The method according to claim 1, wherein the first data is downlink data,

    the terminal device determines the first target slot based on the first value of the first slot difference and the slot n according to the following formula:

$$A= \left\lfloor n \bullet \frac{2^{\mu_{PDSCH}}}{2^{\mu_{PDCCH}}} \right\rfloor +X$$,

wherein

A is an index value of the first target slot, X is the first value of the first slot difference, $\mu_{PDSCH}$ is a numerology numerology of a BWP on which the first data is located, and $\mu_{PDCCH}$ is a numerology of a BWP on which the switching indication information is located.

3. The method according to claim 1, wherein when the first data is uplink data,

   the terminal device determines the first target slot based on the first value of the first slot difference and the slot n according to the following formula:

$$A= \left\lfloor n \cdot \frac{2^{\mu_{PUSCH}}}{2^{\mu_{PDCCH}}} \right\rfloor +X$$,

   wherein

   A is an index value of the first target slot, X is the first value of the first slot difference, $\mu_{PUSCH}$ is a numerology of a BWP on which the first data is located, and $\mu_{PDCCH}$ is a numerology of a BWP on which the switching indication information is located.

4. The method according to any one of claims 1-3, wherein the BWP switching indication information is used to indicate the terminal device to perform BWP switching.

5. The method according to any one of claims 1-4, wherein the first target slot is a slot where the terminal device perform BWP switching.

6. The method according to any one of claims 1-5, when the first data is downlink data, the first slot difference is K0, and when the first data is uplink data, the first slot difference is K2.

7. The method according to any one of claims 1-6, wherein the BWP switching indication information is DCI.

8. A communication method, comprising:

   determining, by a network device, BWP switching indication information, wherein the BWP switching indication information comprises a first value and a minimum value of a first slot difference, and the first slot difference is an interval between a first target slot in which first data is transmitted and a slot n; and the first value is an interval between a first target slot in which first data is transmitted and the slot n, wherein the first data is scheduled by the BWP switching indication information; and
   sending, by the network device, the BWP switching indication information to a terminal device in the slot n, wherein the minimum value of the first slot difference is used by the terminal in a start position of the first target slot, wherein after the minimum value is used, a new interval between receiving new scheduling information by the terminal and transmitting new scheduling data scheduled by the new scheduling information is no less than the minimum value.

9. The method according to claim 8, wherein the BWP switching indication information is used to indicate the terminal device to perform BWP switching.

10. The method according to claim 8 or 9, wherein the first target slot is a slot where the terminal device perform BWP switching.

11. The method according to any one of claims 8-10, when the first data is downlink data, the first slot difference is K0, and when the first data is uplink data, the first slot difference is K2.

12. The method according to any one of claims 8-11, the BWP switching indication information is DCI.

**13.** A network device, comprises a transceiver and a processor, and a memory, the memory is coupled to the processor, and the memory stores a program instruction, the processor is configured to execute the method in any one of the claims of 8-12.

**14.** A terminal device, comprises a transceiver and a processor, and a memory, the memory is coupled to the processor, and the memory stores a program instruction, the processor is configured to execute the method in any one of the claims of 1-7.

**15.** A communications system comprising the terminal device (1100) of claim 14, and the network device (1200) of claim 13.

**Patentansprüche**

**1.** Kommunikationsverfahren, das umfasst:

Empfangen (602), durch ein Endgerät, von BWP-Umschaltanzeigeinformationen von einer Netzwerkvorrichtung in einem Schlitz n, wobei die BWP-Umschaltanzeigeinformationen einen ersten Wert und einen Minimalwert einer ersten Schlitzdifferenz umfassen und der erste Wert ein Intervall zwischen einem ersten Zielschlitz, in dem erste Daten übertragen werden, und dem Schlitz n ist, wobei die Ablaufsteuerung der ersten Daten durch die BWP-Umschaltanzeigeinformationen durchgeführt wird;
Bestimmen (603), durch das Endgerät, des ersten Zielschlitzes basierend auf dem ersten Wert und dem Schlitz n; und
Starten (604) durch das Endgerät, den Minimalwert der ersten Schlitzdifferenz in einer Startposition des ersten Zielschlitzes zu verwenden, wobei, nachdem der Minimalwert verwendet wird, ein neues Intervall zwischen einem Empfangen neuer Ablaufsteuerungsinformationen und einem Übertragen neuer Ablaufsteuerungsdaten, deren Ablaufsteuerung durch die neuen Ablaufsteuerungsinformationen durchgeführt wird, nicht geringer als der Minimalwert ist.

**2.** Verfahren nach Anspruch 1, wobei die ersten Daten Downlink-Daten sind,

das Endgerät den ersten Zielschlitz basierend auf dem ersten Wert der ersten Schlitzdifferenz und dem Schlitz n gemäß der folgenden Formel bestimmt:

$$A = \left\lfloor n \bullet \frac{2^{\mu_{PDSCH}}}{2^{\mu_{PDCCH}}} \right\rfloor + X,$$

wobei
A ein Indexwert des ersten Zielschlitzes ist, X der erste Wert der ersten Schlitzdifferenz ist, $\mu_{PDSCH}$ eine Numerologie-Numerologie eines BWP, auf dem sich die ersten Daten befinden, ist, und $\mu_{PDCCH}$ eine Numerologie eines BWP, auf dem sich die Umschaltanzeigeinformationen befinden, ist.

**3.** Verfahren nach Anspruch 1, wobei, wenn die ersten Daten Uplink-Daten sind,

das Endgerät den ersten Zielschlitz basierend auf dem ersten Wert der ersten Schlitzdifferenz und dem Schlitz n gemäß der folgenden Formel bestimmt:

$$A = \left\lfloor n \cdot \frac{2^{\mu_{PUSCH}}}{2^{\mu_{PDCCH}}} \right\rfloor + X,$$

wobei
A ein Indexwert des ersten Zielschlitzes ist, X der erste Wert der ersten Schlitzdifferenz ist, $\mu_{PUSCH}$ eine Numerologie eines BWP, auf dem sich die ersten Daten befinden, ist, und $\mu_{PDCCH}$ eine Numerologie eines BWP, auf dem sich die Umschaltanzeigeinformationen befinden, ist.

**4.** Verfahren nach einem der Ansprüche 1 bis 3, wobei die BWP-Umschaltanzeigeinformationen verwendet werden, um dem Endgerät anzuzeigen, ein BWP-Umschalten durchzuführen.

5. Verfahren nach einem der Ansprüche 1 bis 4, wobei der erste Zielschlitz ein Schlitz ist, in dem das Endgerät das BWP-Umschalten durchführt.

6. Verfahren nach einem der Ansprüche 1 bis 5, wobei, wenn die ersten Daten Downlink-Daten sind, die erste Schlitzdifferenz K0 ist, und wenn die ersten Daten Uplink-Daten sind, die erste Schlitzdifferenz K2 ist.

7. Verfahren nach einem der Ansprüche 1 bis 6, wobei die BWP-Umschaltanzeigeinformationen DCI sind.

8. Kommunikationsverfahren, das umfasst:

Bestimmen, durch eine Netzwerkvorrichtung, von BWP-Umschaltanzeigeinformationen, wobei die BWP-Umschaltanzeigeinformationen einen ersten Wert und einen Minimalwert einer ersten Schlitzdifferenz umfassen und die erste Schlitzdifferenz ein Intervall zwischen einem ersten Zielschlitz, in dem erste Daten übertragen werden, und einem Schlitz n ist; und der erste Wert ein Intervall zwischen einem ersten Zielschlitz, in dem erste Daten übertragen werden, und dem Schlitz n ist, wobei die Ablaufsteuerung der ersten Daten durch die BWP-Umschaltanzeigeinformationen durchgeführt wird; und
Senden, durch die Netzwerkvorrichtung, der BWP-Umschaltanzeigeinformationen an ein Endgerät in dem Schlitz n, wobei der Minimalwert der ersten Schlitzdifferenz durch das Endgerät in einer Startposition des ersten Zielschlitzes verwendet wird, wobei, nachdem der Minimalwert verwendet wird, ein neues Intervall zwischen dem Empfangen neuer Ablaufsteuerungsinformationen durch das Endgerät und dem Übertragen neuer Ablaufsteuerungsdaten, deren Ablaufsteuerung durch die neuen Ablaufsteuerungsinformationen durchgeführt wird, nicht geringer als der Minimalwert ist.

9. Verfahren nach Anspruch 8, wobei die BWP-Umschaltanzeigeinformationen verwendet werden, um dem Endgerät anzuzeigen, das BWP-Umschalten durchzuführen.

10. Verfahren nach Anspruch 8 oder 9, wobei der erste Zielschlitz ein Schlitz ist, in dem das Endgerät das BWP-Umschalten durchführt.

11. Verfahren nach einem der Ansprüche 8 bis 10, wobei, wenn die ersten Daten Downlink-Daten sind, die erste Schlitzdifferenz K0 ist, und wenn die ersten Daten Uplink-Daten sind, die erste Schlitzdifferenz K2 ist.

12. Verfahren nach einem der Ansprüche 8 bis 11, wobei die BWP-Umschaltanzeigeinformationen DCI sind.

13. Netzwerkvorrichtung, die einen Transceiver und einen Prozessor und einen Speicher umfasst, wobei der Speicher mit dem Prozessor gekoppelt ist und der Speicher eine Programmanweisung speichert, wobei der Prozessor konfiguriert ist, um das Verfahren nach einem der Ansprüche 8 bis 12 auszuführen.

14. Endgerät, das einen Transceiver und einen Prozessor und einen Speicher umfasst, wobei der Speicher mit dem Prozessor gekoppelt ist und der Speicher eine Programmanweisung speichert, wobei der Prozessor konfiguriert ist, um das Verfahren nach einem der Ansprüche 1 bis 7 auszuführen.

15. Kommunikationssystem, das das Endgerät (1100) nach Anspruch 14 und die Netzwerkvorrichtung (1200) nach Anspruch 13 umfasst.

## Revendications

1. Procédé de communication, comprenant :

la réception (602), par un dispositif terminal, d'informations d'indication de commutation BWP provenant d'un dispositif réseau dans un créneau n, dans lequel les informations d'indication de commutation BWP comprennent une première valeur et une valeur minimale d'une première différence de créneau, et la première valeur est un intervalle entre un premier créneau cible dans lequel des premières données sont transmises et le créneau n, dans lequel les premières données sont programmées par les informations d'indication de commutation BWP ;
la détermination (603), par le dispositif terminal, du premier créneau cible sur la base de la première valeur et du créneau n ; et

le démarrage (604), par le dispositif terminal, de l'utilisation de la valeur minimale de la première différence de créneau dans une position de début du premier créneau cible, après l'utilisation de la valeur minimale, un nouvel intervalle entre la réception de nouvelles informations de programmation et la transmission d'une nouvelle programmation les données programmées par les nouvelles informations de programmation ne sont pas inférieures à la valeur minimale.

2. Procédé selon la revendication 1, dans lequel les premières données sont des données de liaison descendante,

le dispositif terminal détermine le premier créneau cible sur la base de la première valeur de la première différence de créneau et le créneau n selon la formule suivante :

$$A = \left\lfloor n \bullet \frac{2^{\mu_{PDSCH}}}{2^{\mu_{PDCCH}}} \right\rfloor + X,$$

dans laquelle
A est une valeur d'index du premier créneau cible, X est la première valeur de la première différence de créneau, $\mu_{PDSCH}$ est une numérologie d'un BWP sur lequel se trouvent les premières données, et $\mu_{PDCCH}$ est une numérologie d'un BWP sur lequel se trouvent les informations d'indication de commutation.

3. Procédé selon la revendication 1, dans lequel lorsque les premières données sont des données de liaison montante,

le dispositif terminal détermine le premier créneau cible sur la base de la première valeur de la première différence de créneau et le créneau n selon la formule suivante :

$$A = \left\lfloor n \cdot \frac{2^{\mu_{PUSCH}}}{2^{\mu_{PDCCH}}} \right\rfloor + X,$$

dans laquelle
A est une valeur d'index du premier créneau cible, X est la première valeur de la première différence de créneau, $\mu_{PUSCH}$ est la numérologie d'un BWP sur lequel se trouvent les premières données, et $\mu_{PDCCH}$ est une numérologie d'un BWP sur lequel se trouvent les informations d'indication de commutation.

4. Procédé selon l'une quelconque des revendications 1 à 3, dans lequel les informations d'indication de commutation BWP sont utilisées pour indiquer au dispositif terminal d'effectuer une commutation BWP.

5. Procédé selon l'une quelconque des revendications 1 à 4, dans lequel le premier créneau cible est un créneau où le dispositif terminal effectue une commutation BWP.

6. Procédé selon l'une quelconque des revendications 1 à 5, lorsque les premières données sont des données de liaison descendante, la première différence de créneau est K0 et lorsque les premières données sont des données de liaison montante, la première différence de créneau est K2.

7. Procédé selon l'une quelconque des revendications 1 à 6, dans lequel les informations d'indication de commutation sont DCI.

8. Procédé de communication, comprenant :

la détermination, par un dispositif réseau, d'informations d'indication de commutation BWP, dans lequel les informations d'indication de commutation BWP comprennent une première valeur et une valeur minimale d'une première différence de créneau, et la première différence de créneau est un intervalle entre un premier créneau cible dans lequel les premières données sont transmis et un créneau n ; et la première valeur est un intervalle entre un premier créneau cible dans lequel des premières données sont transmises et le créneau n, dans lequel les premières données sont programmées planifiées par les informations d'indication de commutation BWP ; et l'envoi, par le dispositif réseau, des informations d'indication de commutation BWP à un dispositif terminal dans le créneau n, dans lequel la valeur minimale de la première différence de créneau est utilisée par le terminal dans une position de départ du premier créneau cible, dans lequel après l'utilisation de la valeur minimale, un nouvel intervalle entre la réception de nouvelles informations de programmation par le terminal et la transmission de nouvelles données de programmation programmées par les nouvelles informations de programmation n'est pas inférieur à la valeur minimale.

9. Procédé selon la revendication 8, dans lequel les informations d'indication de commutation BWP sont utilisées pour indiquer au dispositif terminal d'effectuer une commutation BWP.

10. Procédé selon la revendication 8 ou 9, dans lequel le premier créneau cible est un créneau où le dispositif terminal effectue une commutation BWP.

11. Procédé selon l'une quelconque des revendications 8 à 10, lorsque les premières données sont des données de liaison descendante, la première différence de créneau est K0 et lorsque les premières données sont des données de liaison montante, la première différence de créneau est K2.

12. Procédé selon l'une quelconque des revendications 8 à 11, les informations d'indication de commutation BWP sont DCI.

13. Dispositif réseau, comprenant un émetteur-récepteur et un processeur, et une mémoire, la mémoire est couplée au processeur et la mémoire stocke une instruction de programme, le processeur est configuré pour exécuter le procédé dans l'une quelconque des revendications 8 à 12.

14. Dispositif terminal, comprenant un émetteur-récepteur et un processeur, et une mémoire, la mémoire est couplée au processeur et la mémoire stocke une instruction de programme, le processeur est configuré pour exécuter le procédé dans l'une quelconque des revendications 1 à 7.

15. Système de communication comprenant le dispositif terminal (1100) selon la revendication 14, et le dispositif réseau (1200) selon la revendication 13.

Network device

Terminal device

FIG. 1

A terminal device monitors a PDCCH

On duration
(On duration)

Opportunity for DRX
(Opportunity for DRX)

DRX cycle

FIG. 2

EP 3 993 493 B1

PDCCH

PDCCH

Receiving
a PDCCH

Decoding the
PDCCH and
buffering a
downlink signal

Receiving
a PDCCH

Decoding
PDCCH only

Power
consumption

Power
consumption

FIG. 3

FIG. 4

First
information

On duration
(On duration)

BWP1

BWP2

FIG. 5

FIG. 6

EP 3 993 493 B1

DL BWP1 | Slot n | Slot n+1

DL BWP2 | Slot $\lfloor 2n \rfloor$ | Slot $\lfloor 2n \rfloor$+1 | Slot $\lfloor 2n \rfloor$+2 | Slot $\lfloor 2n \rfloor$+3

UL BWP1 | Slot n | Slot n+1 | Slot n+2 or slot $\left\lfloor \dfrac{\lfloor 2n \rfloor +3}{2} \right\rfloor$

UL BWP2 | Slot $\lfloor 2n \rfloor$ | Slot $\lfloor 2n \rfloor$+1 | Slot $\lfloor 2n \rfloor$+2 | Slot $\lfloor 2n \rfloor$+3

FIG. 7

| DL BWP1 | | Slot n | Slot n+1 | Slot n+2 or slot $\left\lceil \dfrac{\lfloor 2n \rfloor + 3}{2} \right\rceil$ |

| DL BWP2 | Slot $\lfloor 2n \rfloor$ | Slot $\lfloor 2n \rfloor$ +1 | Slot $\lfloor 2n \rfloor$ +2 | Slot $\lfloor 2n \rfloor$ +3 |

| UL BWP2 | Slot n | Slot n+1 |

| UL BWP1 | Slot $\lfloor 2n \rfloor$ | Slot $\lfloor 2n \rfloor$ +1 | Slot $\lfloor 2n \rfloor$ +2 | Slot $\lfloor 2n \rfloor$ +3 |

FIG. 8

Terminal device

901

Processing unit

902

Transceiver unit

FIG. 9

Network device

1001

Processing unit

1002

Transceiver unit

FIG. 10

1100

Terminal device

1101

Transceiver

1102

Processor

1104

1103

Memory

FIG. 11

1200

Network device

1201

Transceiver

1202

Processor

1204

1203

Memory

FIG. 12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MEDIATEK INC.** Summary of Cross-slot Scheduling Power-Saving Techniques. *3GPP DRAFT; R1-1907918*

- **HUAWEI et al.** Procedure of cross-slot scheduling for UE power saving. *3GPP DRAFT; R1-1906006*